# EUROPÄISCHE PATENTSCHRIFT

(11) **EP 1 517 050 B1**
(45) Veröffentlichungstag und Bekanntmachung des Hinweises auf die Patenterteilung: **09.08.2006**
(21) Anmeldenummer: 04104523.8
(22) Anmeldetag: 20.09.2004
(51) Int. Cl.: F16B 2/18, F16B 39/286, F16B 39/38, B24B 45/00

(54) **Selbstsicherndes Schraubelement**
Self-locking threaded element
Elément fileté à verrouillage automatique

(30) Priorität: 22.09.2003 DE 10343753
(43) Veröffentlichungstag der Anmeldung: 23.03.2005
(73) Patentinhaber: HILTI Aktiengesellschaft, 9494 Schaan (LI)
(72) Erfinder: Blatz, Thomas, 86916, Kaufering (DE)
(74) Vertreter: Wildi, Roland

(56) Entgegenhaltungen:
- EP-A- 1 125 687
- GB-A- 280 273
- US-A1- 2002 030 328
- US-A1- 2003 147 719

## Beschreibung

### Technisches Gebiet

Die Erfindung betrifft ein selbstsicherndes Schraubelement, insbesondere zur Befestigung eines scheibenförmigen Werkzeuges an einer Antriebswelle eines elektromotorisch angetriebenen Handwerkzeuges, mit einem Hauptkörper und einem über ein Verbindungselement mit dem Hauptkörper verbundenen Druckkörper. Zumindest der Hauptkörper ist von einem Gewinde durchsetzt. Der Druckkörper weist eine erste Fläche an einer, dem Hauptkörper zugewandten Seite und eine zweite Fläche an einer, dem Hauptkörper abgewandten Seite auf, wobei die erste Fläche eine erste Ebene und die zweite Fläche eine zweite Ebene definiert. Das Schraubelement ist infolge einer relativen Bewegung des Druckkörpers zu dem Hauptkörper mittels eines verschwenkbaren Spreizelementes von einer Schraubstellung in eine Spannstellung bringbar.

### Stand der Technik

Selbstsichernde Schraubelemente der oben genannten Art finden in vielen Gebieten Anwendung. Beispielsweise ist das Schraubelement als Mutterelement ausgebildet, dessen Innengewinde am Hauptkörper mit einem Gewinde einer Gewindestange in Eingriff bringbar ist. Mittels solcher selbstsichernden Schraubenelemente werden z. B. Trennscheiben, Schleifscheiben oder Sägeblätter an einer Antriebswelle beispielsweise eines Schleif- oder Schlitzgerätes befestigt. Insbesondere bei dynamischer Beanspruchung ist das Schraubelement vorteilhafterweise selbstsichernd ausgebildet.

Aus der DE 101 61 026 A1 ist ein selbstsicherndes Schraubelement bekannt, das einen, mit einem Gewinde durchsetzten Hauptkörper und einen mit dem Hauptkörper über ein Verbindungselement verbundenen Druckkörper aufweist. Der Druckkörper wird durch Verschwenken eines, am Hauptkörper angeordneten Spreizelementes gegenüber dem Hauptkörper verschwenkt. Das selbstsichernde Schraubelement wird mittels des Spreizelementes von einer Schraubstellung, in welcher das Schraubelement auf eine Gewindestange oder eine Antriebswelle eines Handwerkzeuges aufschraubbar ist, in eine Spannstellung überführt, in welcher das Schraubelement selbstsichernd an der Gewindestange oder an der Antriebswelle des Handwerkzeuges gehalten ist.

Das selbstsichernde Schraubelement gemäss der DE 101 61 026 A1 gewährleistet auch bei dynamischen Beanspruchungen einen ausreichenden Halt des mit dem Schraubelement fixierten Gegenstandes. Nachteilig an der bekannten Lösung ist jedoch, dass bei der Montage des selbstsichernden Schraubelementes dieses bereits in einem frühen Montagezustand beim Aufschrauben desselben in einen flächigen Kontakt mit dem zu fixierenden Gegenstand kommen kann. Die dabei auftretenden Reibungswiderstände verunmöglichen zumeist einen direkten Kontakt des Schraubelementes bereits in der Schraubstellung, weshalb für eine sichere Fixierung des Gegenstandes ein verhältnismässig grosser Abstand zwischen dem Druckkörper und dem zu fixierenden Gegenstand mittels des verschwenkbaren Spreizelementes überwunden werden muss. Dies führt dazu, dass der Anwender zum Verschwenken des Spreizelementes einen hohen Kraftaufwand aufbringen muss. Zudem ist das bekannte selbstsichernde Schraubelement insbesondere im Bereich des Verbindungselementes hohen Belastungen auf das Material ausgesetzt, was die Gebrauchstauglichkeit des selbstsichernden Schraubelementes bei einer mehrmaligen Verwendung massgeblich reduziert.

### Darstellung der Erfindung

Aufgabe der Erfindung ist es, ein selbstsicherndes Schraubelement zu schaffen, das einfach und mit geringem Kraftaufwand montierbar ist.

Die Aufgabe ist durch die Merkmale des unabhängigen Anspruchs gelöst. Vorteilhafte Weiterbildungen sind in den Unteransprüchen dargelegt.

Gemäss der Erfindung verläuft die zweite Ebene zu der ersten Ebene in einem Winkel. Infolge des gegenüber den bekannten Schraubelementen geringen flächigen Kontaktbereichs zwischen dem Schraubelement und dem zu fixierenden Gegenstand kann das erfindungsgemässe selbstsichernde Schraubelement bereits in der Schraubstellung des Schraubelementes näher an den zu fixierenden Gegenstand gebracht werden. Vorzugsweise ist die im Wesentlichen gesamte zweite Fläche an der zweiten Seite des Druckkörpers im Winkel geneigt, so dass der Kontakt zwischen dem Schraubelement und dem zu fixierenden Gegenstand in der Schraubstellung des Schraubelementes auf einen Linien-, beziehungsweise auf einen Punktkontakt reduziert ist. Der Verschwenkbereich des Druckkörpers gegenüber dem Hauptkörper wird auf ein Minimum beschränkt, womit der benötigte Kraftaufwand zum Verschwenken des Spreizelementes von der Schraubstellung in die Spannstellung des erfindungsgemässen selbstsichernden Schraubelementes geringer als bei den bekannten Ausführungen ist.

Bevorzugt beträgt der Winkel zwischen der zweiten Ebene und der ersten Ebene 1 ° bis 15°. Je geringer der Winkel zwischen den beiden Ebenen gewählt wird, desto geringer ist der Betrag des Weges, um welchen der Druckkörper gegenüber dem Hauptkörper mittels des Spreizelementes zur Überführung des erfindungsgemässen selbstsichernden Schraubelementes von der Schraubstellung in die Spannstellung verschwenkt werden muss.

Vorzugsweise ist das Spreizelement um eine Schwenkachse am Hauptkörper schwenkbar und weist eine exzentrische Druckfläche auf, deren Radialabstand von der Schwenkachse in Schwenkrichtung von der Spannstellung zur Schraubstellung hin abnimmt. Das Spreizelement weist beispielsweise zwei Gabelschenkel und einen Betätigungsabschnitt auf. Die Gabelschenkel sind vorteilhafterweise mittels einer Achse oder mittels Lagerstiften, welche die Schwenkachse des Spreizelementes bilden, in Ausnehmungen an dem Hauptkörper gehalten. In der Spannstellung des erfindungsgemässen selbstsichernden Schraubelementes ist der Teil der Druckfläche mit der grössten Exzentrizität, bezogen auf die Schwenkachse, auf den Druckkörper wirksam. Wird dagegen das Spreizelement um die Schwenkachse in die Schraubstellung verschwenkt, so wird der Teil der Druckfläche mit der grössten Exzentrizität wegbewegt und der Teil der Druckfläche gelangt in Funktion, der eine mit zunehmenden Schwenkwinkel abnehmende Exzentrizität bis hin zur minimalen Exzentrizität aufweist.

Vorzugsweise sind der Hauptkörper, das Verbindungselement und der Druckkörper zusammen einteilig ausgebildet womit eine kompakte Bauweise sichergestellt ist.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die Erfindung wird nachstehend anhand eines Ausführungsbeispieles näher erläutert. Es zeigen:

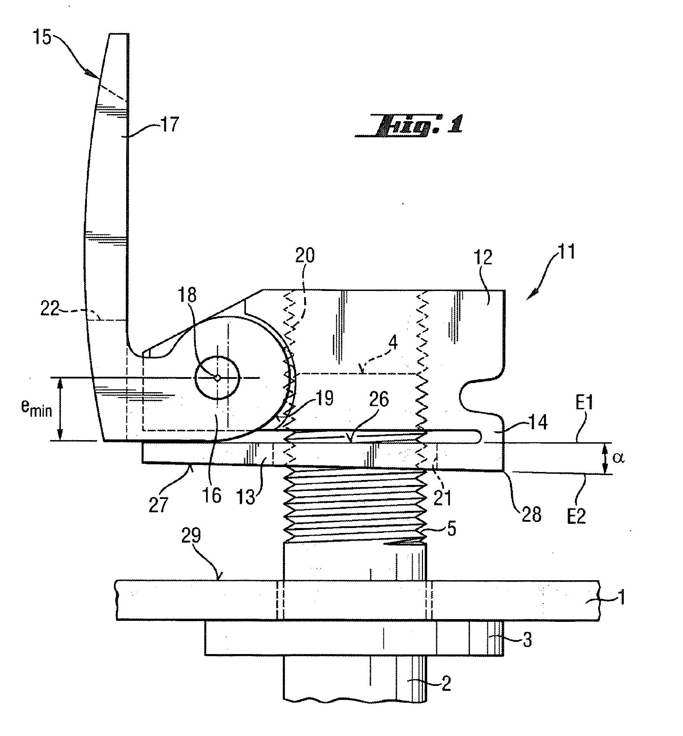

- Fig. 1: Eine Seitenansicht eines erfindungsgemässen selbstsichernden Schraubelementes in der Schraubstellung; und

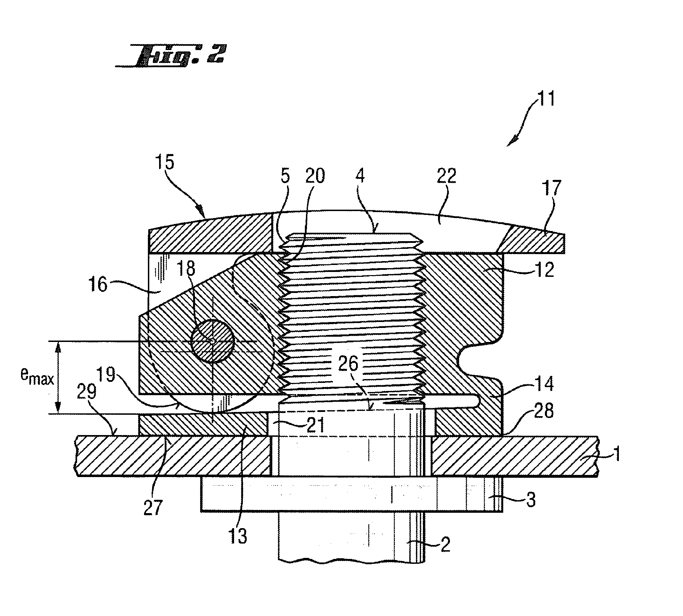

- Fig. 2: einen Längsschnitt des selbstsichernden Schraubelementes in der Spannstellung.

Grundsätzlich sind in den Figuren gleiche Teile mit den gleichen Bezugszeichen versehen.

### Wege zur Ausführung der Erfindung

Mittels des erfindungsgemässen selbstsichernden Schraubelementes 11 wird ein scheibenförmiges Werkzeug 1 an einer Antriebswelle 2 eines Handwerkzeuges, wie beispielsweise an einem Schleifgerät befestigt. Die Antriebswelle 2 weist einen geräteseitigen Anschlag 3 auf und ist im Bereich des freien Endes 4 mit einem Aussengewinde 5 versehen.

Das selbstsichernde Schraubelement 11 umfasst einen Hauptkörper 12 und einen Druckkörper 13, welcher über einen, als Verbindungselement 14 ausgebildeten Verbindungssteg mit dem Hauptkörper 12 verschwenkbar verbunden ist. Der Hauptkörper 12, der als Verbindungselement 14 ausgebildete Verbindungssteg und der Druckkörper 13 sind einteilig ausgebildet. Weiter umfasst das selbstsichernde Schraubelement 11 ein Spreizelement 15, welches zwei Gabelabschnitte 16 und einen Betätigungsabschnitt 17 aufweist. Die Gabelabschnitte 16 weisen infolge einer aussermittigen Anordnung der Schwenkachse 18 an deren freien Enden jeweils eine exzentrische Druckfläche 19 auf. Die exzentrische Druckfläche 19 weist in der Schraubstellung die geringste Exzentrizität eₘᵢₙ und in der Spanstellung die grösste Exzentrizität emax auf.

Der Hauptkörper 12 ist mit einem Gewinde 20 durchsetzt, welches mit dem Aussengewinde 5 an der Antriebswelle 2 in Eingriff bringbar ist. Der Druckkörper 13 weist eine Öffnung 21 auf, die im Durchmesser grösser als der Aussendurchmesser der Antriebswelle 2 ausgebildet ist. Der Betätigungsabschnitt 17 des selbstsichernden Schraubelementes 11 ist ebenfalls mit einer Öffnung 22 versehen, deren Abmessungen ein Verschwenken des Spreizelementes 15 von der Schraubstellung in die Spannstellung sowie von der Spannstellung in die Schraubstellung ermöglicht. In der Spannstellung liegt das Spreizelement 15 im Wesentlichen an der Aussenfläche des Hauptkörpers 12 an.

Durch die erste Fläche an der, dem Hauptkörper 12 zugewandten Seite 26 des Druckkörpers 13 wird eine erste Ebene E1 und durch die zweite Fläche an der, dem Hauptkörper 12 abgewandten Seite 27 des Druckkörpers 13 wird eine zweite Ebene E2 definiert. Die zweite Ebene E2 verläuft in einem Winkel α von etwa 8° zu der ersten Ebene E1. Beim Aufschrauben des selbstsichernden Schraubelementes 11 auf die Antriebswelle 2 kommt in der Schraubstellung des selbstsichernden Schraubelementes nur die Kante 28 mit der, dem selbstsichernden Schraubelement 11 zugewandten Seite 29 des scheibenförmigen Werkzeuges 1 in Kontakt.

Durch Verschwenken des Spreizelementes 15 wird die, dem Hauptkörper 12 des selbstsichernden Schraubelementes 11 abgewandte Seite 27 des Druckkörpers 12 in flächigen Kontakt mit der, dem selbstsichernden Schraubelement 11 zugewandten Seite 29 des scheibenförmigen Werkzeuges 1 gebracht und das scheibenförmige Werkzeug 1 an dem Handwerkzeug gesichert.

## Patentansprüche

1. Selbstsicherndes Schraubelement, insbesondere zur Befestigung eines scheibenförmigen Werkzeuges (1) an einer Antriebswelle (2) eines elektromotorisch angetriebenen Handwerkzeuges, mit einem Hauptkörper (12) und einem über ein Verbindungselement (14) mit dem Hauptkörper (12) verbundenen Druckkörper (13), wobei zumindest der Hauptkörper (12) von einem Gewinde (20) durchsetzt ist und wobei der Druckkörper (13) eine erste Fläche an einer, dem Hauptkörper (12) zugewandten Seite (26) und eine zweite Fläche an einer, dem Hauptkörper (12) abgewandten Seite (27) aufweist, wobei die erste Fläche eine erste Ebene (E1) und die zweite Fläche eine zweite Ebene (E2) definiert, und das Schraubelement (11) infolge einer relativen Bewegung des Druckkörpers (13) zu dem Hauptkörper (12) mittels eines verschwenkbaren Spreizelementes (15) von einer Schraubstellung in eine Spannstellung bringbar ist, **dadurch gekennzeichnet, dass** die zweite Ebene (E2) zu der ersten Ebene (E1) in einem Winkel (α) verläuft.

2. Schraubelement nach Anspruch 1, **dadurch gekennzeichnet, dass** der Winkel (α) 1° bis 15° beträgt.

3. Schraubelement nach Anspruch 1 oder 2, **dadurch gekennzeichnet, dass** das Spreizelement (15) um eine Schwenkachse (18) am Hauptkörper (12) schwenkbar ist und eine exzentrische Druckfläche (19) aufweist, deren Radialabstand von der Schwenkachse (18) in Schwenkrichtung von der Spannstellung zur Schraubstellung hin abnimmt.

4. Schraubelement nach einem der Ansprüche 1 bis 3, **dadurch gekennzeichnet, dass** der Hauptkörper (12), das Verbindungselement (14) und der Druckkörper (13) zusammen einteilig ausgebildet sind.

## Claims

1. Self-locking threaded element, in particular for fixing a disc-shaped tool (1) to a drive shaft (2) of an electric-motor driven hand tool, comprising a main body (12) and a pressure body (13) connected to the main body (12) via a connecting element (14), a screw thread (20) passing through at least the main body (12), and the pressure body (13) having a first face on a side (26) oriented towards the main body (12) and a second face on a side (27) oriented away from the main body (12), the first face defining a first plane (E1) and the second face defining a second plane (E2), and the threaded element (11) being movable from a screwing position to a clamping position as a result of a relative movement of the pressure body (13) with respect to the main body (12) by means of a swivellable spreading element (15), **characterised in that** the second plane (E2) is disposed at an angle (α) with respect to the first plane (E1).

2. Threaded element according to claim 1, **characterised in that** the angle (α) is from 1° to 15°.

3. Threaded element according to claim 1 or 2, **characterised in that the** spreading element (15) is swivellable about a pivot axis (18) on the main body (12) and includes an eccentric pressure face (19) the radial distance of which from the pivot axis (18) decreases in the swivelling direction from the clamping position to the screwing position.

4. Threaded element according to any one of claims 1 to 3, **characterised in that** the main body (12), the connecting element (14) and the pressure body (13) are formed together in one piece.

## Revendications

1. Élément de vis autobloquant, en particulier pour la fixation d'un outillage en forme de disque (1) à un arbre d'entraînement (2) d'un outil à main à entraînement électromoteur, comprenant un corps principal (12) et un corps de pression (13) relié au corps principal (12) par l'intermédiaire d'un élément de liaison (14), au moins le corps principal (12) étant traversé par un filetage (20), et le corps de pression (13) comportant une première surface sur un côté (26) tourné vers le corps principal (12) et une seconde surface sur un côté (27) orienté à l'opposé du corps principal (12), la première surface définissant un premier plan (E1) et la seconde surface définissant un second plan (E2), et l'élément de vis (11) pouvant être amené dans une position de serrage à la suite d'un déplacement relatif du corps de pression (13) par rapport au corps principal (12) au moyen d'un élément d'écartement pivotant (15), **caractérisé en ce que** le second plan (E2) s'étend selon un angle (α) par rapport au premier plan (E1).

2. Élément de vis selon la revendication 1, **caractérisé en ce que** l'angle (α) est de 1° à 15°.

3. Élément de vis selon la revendication 1 ou 2, **caractérisé en ce que** l'élément d'écartement (15) peut pivoter autour d'un axe de pivotement (18) situé sur le corps principal (12) et comporte une surface de pression excentrique (19) dont la distance radiale à l'axe de pivotement (18) diminue dans le sens de pivotement de la position de serrage vers la position de vissage.

4. Élément de vis selon une des revendications 1 à 3, **caractérisé en ce que** le corps principal (12), l'élément de liaison (14) et le corps de pression (13) sont réalisés ensemble d'un seul tenant.
